# FASCICULE DE BREVET EUROPEEN

(11) **EP 1 847 424 B1**
(45) Date de publication et mention de la délivrance du brevet: **25.03.2009**
(21) Numéro de dépôt: 07290489.9
(22) Date de dépôt: 19.04.2007
(51) Int. Cl.: B60R 22/34

(54) **Enrouleur autobloquant pour une ceinture de sécurité d'un véhicule automobile et système de sécurité comportant un tel enrouleur**
Selbstsperrendes Aufrollsystem für einen Sicherheitsgurt eines Kraftfahrzeugs und Sicherheitssystem, das ein solches Aufrollsystem umfasst
Self-locking winder for an automobile seat belt and safety system comprising such a winder

(30) Priorité: 21.04.2006 FR 0651419
(43) Date de publication de la demande: 24.10.2007
(73) Titulaire: Lisi Automotive Rapid, 95650 Puiseux Pontoise (FR)
(72) Inventeur: Jolicor, Joël, 25600 Vieux Charmont (FR); Zariani, Tagi, Toronto, ON M5R 1S7 (CA)
(74) Mandataire: Berger, Helmut

(56) Documents cités:
- DE-U1- 29 622 181
- US-B1- 6 241 172

## Description

La présente invention concerne un enrouleur autobloquant pour une ceinture de sécurité d'un véhicule automobile, comprenant une bobine d'enroulement montée en rotation dans un boîtier et un limiteur étagé de contraintes avec une barre de torsion montée par une de ses deux extrémités opposées sur un axe de la bobine d'enroulement et par l'autre extrémité sur un moyen de blocage commandé par un paramètre du véhicule et/ou de la ceinture de sécurité. La présente invention concerne également un système de sécurité pour les passagers d'un véhicule automobile avec au moins un coussin gonflable monté devant un passager et un enrouleur autobloquant pour une ceinture de sécurité d'un véhicule automobile comme décrit ci avant.

Traditionnellement, des dispositifs limiteurs étagés, tels que décrits par exemple dans le document US-A-6 592 064, comprennent une barre de torsion traditionnelle et un élément supplémentaire limiteur de contraintes en acier qui se plie ou casse pour admettre une charge ponctuelle d'une amplitude certaine en liaison avec un limiteur de charges ou de contraintes formé par une barre de torsion traditionnelle.

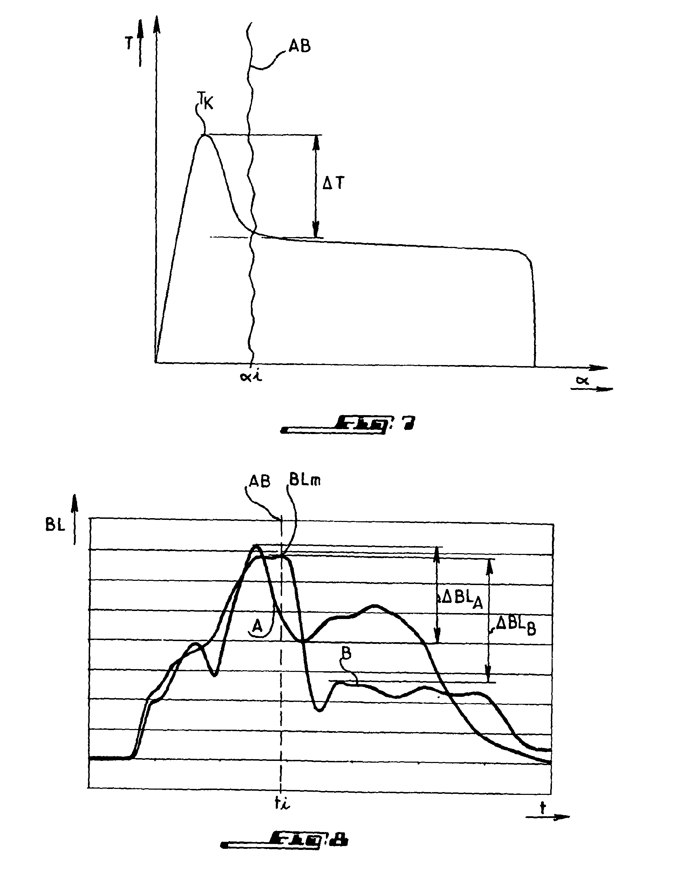

Le désavantage du dispositif connu du document US-A-6 592 064 consiste en le fait que l'étagement de la charge sur la ceinture de sécurité se fait à un niveau relativement faible et que la durée de la charge maximale est limitée, comme cela est montré sur le diagramme de la figure 8 de la présente demande de brevet par la courbe A représentant la charge sur une ceinture passant par l'épaule. La charge A de la ceinture passant par l'épaule n'est pas aussi efficace que la charge B de l'autre ceinture passant par l'épaule, puisqu'il y a une perte d'énergie avant la ligne en traits interrompus tᵢ sur le diagramme de la figure 8. De plus, l'énergie absorbée par B est supérieure à celle absorbée par A avant l'interaction entre le passager et le coussin gonflable.

En ce qui concerne le système de sécurité pour les passagers d'un véhicule automobile, système qui comprend au moins un coussin gonflable et un enrouleur autobloquant comme décrit ci avant, la demande internationale WO 96/32 303 décrit un système à priori comparable mais sans rentrer dans les détails. En effet, ce document divulgue l'utilisation du système d'enrouleur ensemble avec un coussin gonflable, sans pour autant décrire la répartition des effets de protection de l'un et de l'autre des moyens ni tout autre interaction entre le coussin gonflable et l'enrouleur de ceinture de sécurité.

De plus, le document US 6 241 172 B1, qui est considéré comme l'état de la technique le plus proche, divulgue un enrouleur autobloquant avec les caractéristiques du préambule de la revendication indépendante 1.

Le but de l'invention est de proposer un enrouleur autobloquant du type décrit en introduction, qui ne présente pas les caractéristiques limitées des enrouleurs traditionnellement utilisés.

Avantageusement, l'invention devrait proposer un système de sécurité comprenant un coussin gonflé et un enrouleur amélioré de manière que l'utilisation du coussin gonflé et de la ceinture de sécurité soit optimisée.

L'invention devrait enfin permettre d'obtenir un système de sécurité avec un système d'absorption d'énergie cinétique d'un passager, dans lequel le coussin gonflable et l'enrouleur autobloquant coopèrent essentiellement d'une manière prévisible et prédéterminée.

Le but de l'invention est atteint avec un enrouleur autobloquant pour une ceinture de sécurité d'un véhicule automobile, comprenant une bobine d'enroulement montée en rotation dans un boîtier et un limiteur étagé de contrainte à barre de torsion montée par une de ses deux extrémités opposées sur un axe de la bobine d'enroulement et par l'autre extrémité sur un moyen de blocage commandé par un paramètre du véhicule et/ou de la ceinture de sécurité.

Conformément à l'invention, la barre de torsion est un limiteur à deux niveaux de contrainte comprenant des moyens limiteurs principaux à barre de torsion et, axialement aligné avec ceux-ci, des moyens supplémentaires limiteurs de contrainte montés par leur extrémité extérieure sur un élément bloqué en rotation dans une situation prédéterminée.

Selon différents modes de réalisation et de variantes envisageables, la présente invention concerne également les caractéristiques ci-après, considérés isolément ou selon toutes combinaisons techniquement possibles :
les moyens limiteurs principaux et les moyens supplémentaires sont des parties d'une barre de torsion réalisée en une seule pièce ;
les moyens supplémentaires sont constitués par une barre de torsion tubulaire ayant un diamètre intérieur prédéterminé et une épaisseur prédéterminée ;
les moyens supplémentaires sont constitués par une partie de la barre de torsion, dont le diamètre est réduit d'une manière prédéterminée ;
la barre de torsion formant un limiteur à deux niveaux de contrainte est réalisée en deux parties, les moyens supplémentaires limiteurs de contrainte étant reliés par leur extrémité intérieure de manière non rotative à la bobine d'enroulement de la ceinture de sécurité et par leur extrémité extérieure de manière non rotative à l'élément bloqué en rotation en cas d'accident ;
la barre formant les moyens limiteurs supplémentaires est pourvue d'une rainure annulaire afin de casser sous un angle de torsion prédéterminé ;
la barre formant les moyens limiteurs supplémentaires est pourvue d'un trou axial ayant un diamètre prédéterminé et une épaisseur prédéterminée entre son diamètre extérieur et son diamètre intérieur ;
l'enrouleur comprend des moyens pré-tendeurs.

Le but de l'invention est également atteint avec un système de sécurité pour les passagers d'un véhicule automobile avec au moins un coussin gonflable monté devant un passager et un enrouleur tel que décrit ci avant. Le système est conformé pour que les moyens limiteurs supplémentaires cassent à un angle de torsion prédéterminé en fonction du gonflage du coussin gonflable et de manière que le coussin gonflable absorbe une partie importante de l'énergie du passager en cas d'accident.

D'autres caractéristiques et avantages de la présente invention ressortiront de la description ci-après d'un mode de réalisation de l'invention, description fait en référence aux dessins annexés, dans lesquels
- la figure 1 montre schématiquement l'intérieur d'un véhicule automobile avec un conducteur sécurisé par une ceinture de sécurité et un coussin gonflable activé,
- la figure 2 est une coupe axiale d'un enrouleur selon l'invention,
- la figure 3 est une vue explosée d'un enrouleur selon l'invention,
- les figures 4 à 6 sont des coupes axiales, similaires à celle de la figure 2, de trois modes de réalisation différents d'un enrouleur selon l'invention,
- la figure 7 est un diagramme montrant le couple agissant sur une barre de torsion de l'enrouleur selon l'invention en fonction de l'angle de torsion de la barre de torsion, et
- la figure 8 est un diagramme montrant la charge sur une ceinture de sécurité passant par l'épaule en fonction du temps écoulé dans un accident, pour deux enrouleurs différents dont l'un est un enrouleur traditionnellement utilisé et dont l'autre est un enrouleur selon l'invention.

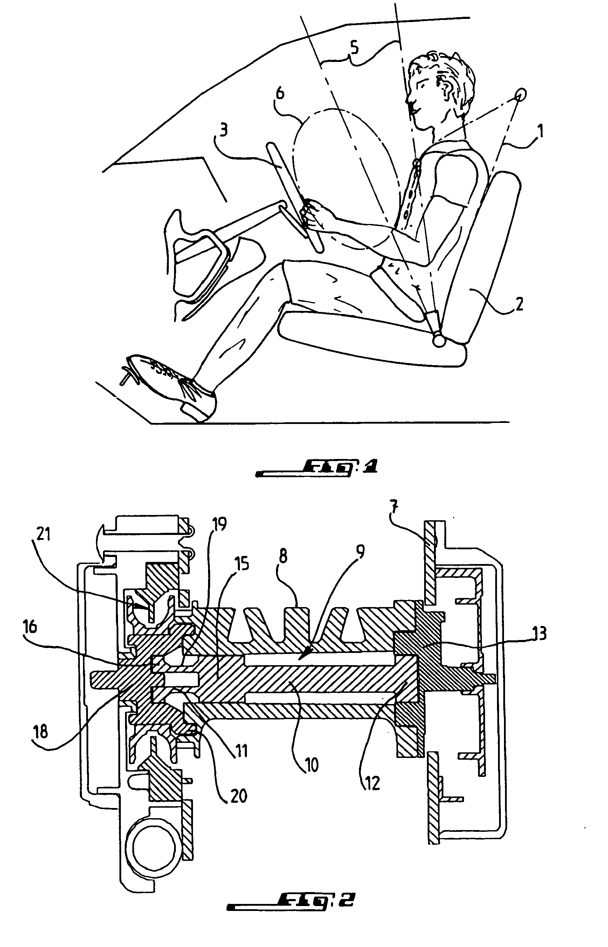

La présente invention concerne un système de sécurité pour les passagers d'un véhicule automobile avec un enrouleur autobloquant d'une ceinture de sécurité et un coussin gonflable. Un tel système est représenté schématiquement sur la figure 1 qui représente un conducteur retenu par une ceinture de sécurité 1 sur un siège 2 devant un volant 3. Comme cela est représenté par des lignes interrompues 5, le mouvement du conducteur attaché avec la ceinture de sécurité est ralenti d'abord par l'enrouleur autobloquant jusqu'à ce que le coussin gonflable 6 est entièrement gonflé comme représenté par la ligne interrompue 6.

Conformément à l'invention, on recherche à limiter la contrainte agissant sur l'enrouleur afin d'absorber l'énergie cinétique du passager très tôt dans un accident. A cette fin, l'enrouleur autobloquant de l'invention comprend des moyens limiteurs étagés de charge décrit en d'avantage de détails ci-après, notamment en référence à la figure 2. Conformément à l'invention, l'enrouleur est conçu de manière à assurer qu'une partie relativement importante de l'énergie cinétique du passager sera absorbée par le coussin gonflable qui assure un contact avec le corps du passager sur une surface assez importante alors que l'interaction entre la ceinture de sécurité et le passager aux alentours de l'épaule doit être considérée comme quasiment ponctuelle.

Les enrouleurs autobloquants peuvent être adaptés, par exemple, de manière à assurer une absorption optimale d'énergie cinétique entre la ceinture de sécurité et le coussin gonflable. Toutefois, l'enrouleur proposé par l'invention permet d'obtenir différentes proportions d'absorption selon les données géométriques de l'espace intérieur du véhicule et selon les besoins des passagers.

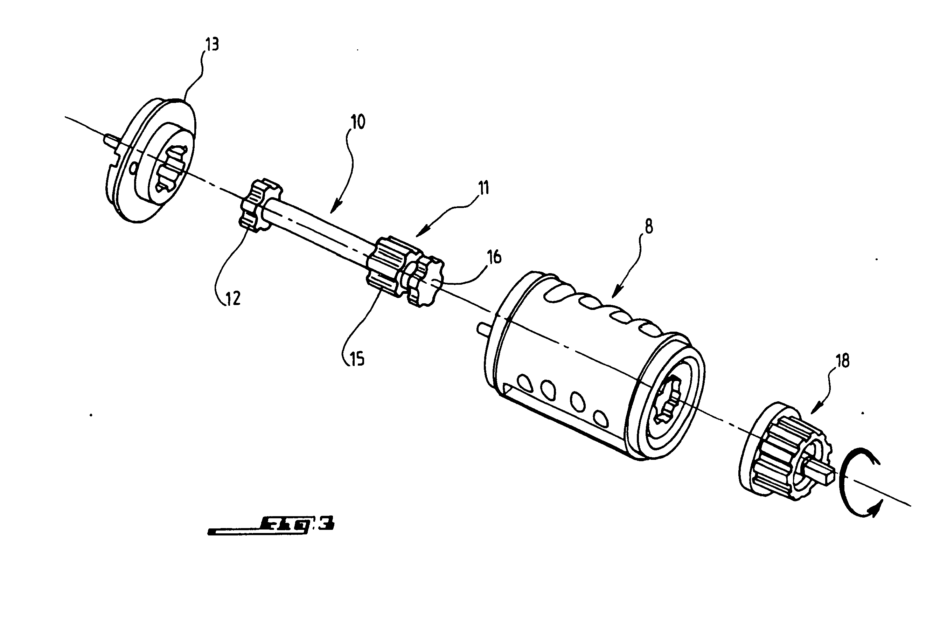

Les figures 2 et 3 représentent de deux manières différentes et en plus de détails, un enrouleur autobloquant selon l'invention.

Un enrouleur autobloquant pour une ceinture de sécurité d'un véhicule automobile selon l'invention comprend essentiellement un axe d'enroulement ou bobine d'enroulement 8 pour la ceinture de sécurité 1, monté en rotation dans un boîtier 7, et un limiteur de contrainte à deux niveaux à barre de torsion 9 qui s'étend de manière concentrique à l'intérieur de la bobine 8 et comprend une partie principale 10 du limiteur de contrainte de la barre de torsion et, axialement alignée avec cette partie principale 10, un limiteur supplémentaire de contrainte 11. La partie standard 10 de la barre de torsion est pourvue, à son extrémité extérieure, avec un élément de tête 12 monté de manière non rotative dans une tête profilée taraudée 13 qui coopère avec un moyen de blocage commandé par un paramètre du véhicule automobile et/ou de la ceinture de sécurité, comme cela est décrit, par exemple, dans le document WO 96/32303. Comme la figure 3 le montre, la tête de liaison 12 peut se présenter sous la forme d'un pignon.

La partie principale 10 de la barre de torsion, qui peut être considérée comme une barre de torsion primaire, est fixée sur l'autre extrémité, l'extrémité intérieure, par une tête de connexion 15 ayant la forme d'un pignon, de manière non rotative dans la bobine d'enroulement 8 de la ceinture de sécurité.

Selon le mode de réalisation représenté sur les figures 2 et 3, le limiteur de contrainte secondaire ou supplémentaire 11 est réalisé en une seule pièce avec la partie primaire de barre de torsion 10 et partage avec celle-ci la tête de connexion 15. L'extrémité extérieure libre 16 de la partie secondaire 11 est réalisée sous la forme d'une tête de connexion montée de manière non rotative dans une pièce de terminaison 18. La tête de connexion 16 peut avoir un profil radialement extérieur d'un pignon.

La partie supplémentaire ou secondaire de barre de torsion entre la tête de connexion 15, qui est en commun à la partie primaire et à la partie secondaire de la barre, et la tête de connexion 16 de l'extrémité libre est conformée de manière à former une partie 19 cassable dont la fonction sera expliquée ci-après.

La tête de terminaison ou couvercle 18 comprend une extrémité 20 sous la forme d'une bride engagée de manière rotative dans la bobine 8. Un dispositif pyrotechnique pré-tendeur 21 applique un couple au couvercle 18, comme cela est décrit, par exemple, dans le document US-A-6 241 172.

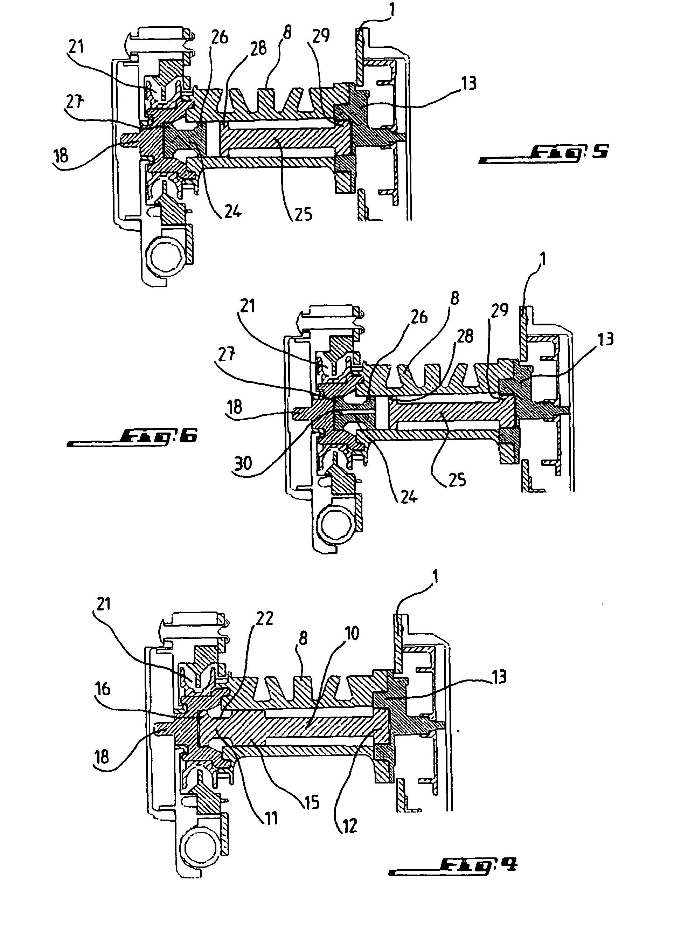

Les figures 2 et 4 à 6 représentent différents modes de réalisation du limiteur de charge supplémentaire 11, sachant que les figures 2 et 4 concernent un limiteur de charge à deux niveaux à barre de torsion en une seule pièce et les figures 5 et 6 à deux pièces.

Dans le mode de réalisation représenté sur la figure 2, le limiteur de charge supplémentaire ou secondaire 11, qui est réalisé en une seule pièce avec la barre de torsion primaire 10, est une partie de barre tubulaire ayant un diamètre intérieur prédéterminé et une épaisseur prédéterminée.

La figure 4 montre un mode de réalisation dans lequel le limiteur de charge supplémentaire 11 est formé par une barre de torsion qui ne comprend pas de trou axial mais qui comporte une rainure annulaire 22 prédéterminée dont le diamètre est déterminé en fonction de l'angle de torsion et de casse recherché.

Les figures 5 et 6 montrent un autre mode de réalisation du limiteur de charge supplémentaire ou auxiliaire en deux variantes différentes qui se distinguent par le fait que le limiteur de charge supplémentaire ou auxiliaire se présente sous la forme d'une barre de torsion séparée 24 axialement alignée avec la barre de torsion principale 25 et qui est fixée par son extrémité extérieure 27 de manière non rotative au couvercle 18, la partie entre les têtes 26 et 27 constituant la partie cassable de la barre. La barre de torsion 25 est reliée par des connecteurs non rotatifs 28 et 29 respectivement à la bobine 8 et à la tête taraudée 13.

Dans la version représentée sur la figure 5, la barre de torsion secondaire 24 ne comprend pas de trou axial, alors que dans la variante représentée sur la figure 6, la barre représentant la partie secondaire comprend un trou axial 30.

La description ci-après se réfère à la figure 7 et a pour objet le fonctionnement d'un enrouleur autobloquant selon l'invention en cas d'un accident. La figure 7 représente la façon dans laquelle l'enrouleur et un coussin gonflable coopèrent et indique plus particulièrement le couple T agissant sur la barre de torsion en fonction de l'angle de torsion α. La courbe représentée dans ce diagramme correspond au mode de réalisation avec une barre de torsion tubulaire. Tout au début, la pente fortement montante est déterminée par le dispositif pyrotechnique pré-tendeur enroulant la ceinture et retenant le passager ainsi sur son siège, et par la combinaison des moyens limiteurs de charge des barres de torsion primaire et secondaire jusqu'à atteindre la valeur maximale (Tₖ), à laquelle la barre de torsion supplémentaire casse. Ceci engendre un changement étagé (ΔT) de la charge sur la ceinture jusqu'à une valeur essentiellement constante déterminée essentiellement uniquement par la charge sur la barre de torsion. A un angle de torsion αᵢ prédéterminé de la barre de torsion, par exemple à 50° ou plus, le coussin gonflable est suffisamment gonflé pour pouvoir supporter la charge et prendre en charge l'absorption de l'énergie cinétique du passager attaché avec la ceinture de sécurité.

AB indique l'angle de torsion αᵢ de l'intervention du coussin gonflable. Jusqu'à cet angle αᵢ, la charge est prise en compte par le système à barre de torsion à deux niveaux. Il convient de noter que le coussin gonflable intervient avantageusement à la fin du changement gradué de la charge.

Il convient de noter également que l'angle αᵢ, auquel le coussin gonflable intervient varie selon les ceintures de sécurité considérées et selon les conceptions des véhicules.

L'avantage du système enrouleur autobloquant selon l'invention par rapport à des systèmes limiteurs de charge gradués tels que décrit par exemple dans le document US-A-6 592 064, est illustré sur la figure 8 qui montre la charge sur une ceinture de sécurité passant par l'épaule en fonction du temps écoulé dans un accident. La courbe A concerne un dispositif traditionnellement utilisé et la courbe B concerne l'enrouleur selon l'invention. La ligne AB indique le moment Tᵢ auquel le coussin gonflable intervient pour prendre en charge l'absorption de l'énergie cinématique du passager.

En comparaison avec la courbe A, la pente de la courbe B est plus régulière. La charge sur la ceinture est donc optimale pour le passager attaché. Par ailleurs, les moyens limiteur de charge à deux niveaux à barre de torsion selon l'invention apportent l'avantage par rapport à des conceptions traditionnelles d'une plus grande durée de la valeur maximale BLm et un changement beaucoup plus grand du changement gradué ΔBL de la charge agissant sur la ceinture de sécurité suivi par une valeur relativement plus faible et essentiellement constante de charge sur la ceinture passant par l'épaule, comme déterminé par la partie primaire de la barre de torsion.

## Revendications

1. Enrouleur auto-bloquant pour une ceinture de sécurité d'un véhicule automobile équipé d'un coussin gonflable, la ceinture de sécurité et le coussin gonflable étant destinés à protéger, de manière interdépendante, le même passager, l'enrouleur, comprenant une bobine d'enroulement (8) montée en rotation dans un boîtier (7) et un limiteur étagé de contrainte à barre de torsion (9) montée par une (12) de ses deux extrémités opposées (12, 15) sur un axe de la bobine d'enroulement (8) et par l'autre extrémité (15) sur un moyen de blocage commandé par un paramètre du véhicule et/ou de la ceinture de sécurité, la barre de torsion (9) étant un limiteur à deux niveaux de contrainte comprenant des moyens limiteurs principaux (10) à barre de torsion et, axialement aligné avec ceux-ci (10), des moyens supplémentaires (11) limiteurs de contrainte montés par leur extrémité extérieure (16) sur un élément (18) bloqué en rotation dans une situation prédéterminée, **caractérisé en ce que** les moyens supplémentaires (11) limiteurs de contrainte sont conformés de manière à former une partie cassable (19) destinée à casser lorsqu'un couple maximal (Tk) prédéterminé agissant sur la barre de torsion (9) est dépassé.

2. Enrouleur selon la revendication 1, **caractérisé en ce que** les moyens limiteurs principaux (10) et les moyens supplémentaires (11) sont des parties d'une barre de torsion (9) réalisée en une seule pièce.

3. Enrouleur selon la revendication 2, **caractérisé en ce que** les moyens supplémentaires (11) sont constitués par une barre de torsion tubulaire ayant un diamètre intérieur prédéterminé et une épaisseur prédéterminée.

4. Enrouleur selon la revendication 2, **caractérisé en ce que** les moyens supplémentaires (11) sont constitués par une partie de la barre de torsion, dont le diamètre est réduit d'une manière prédéterminée.

5. Enrouleur selon la revendication 1, **caractérisé en ce que** la barre de torsion (9) formant un limiteur à deux niveaux de contrainte est réalisée en deux parties (10, 11), les moyens supplémentaires (11) limiteurs de contrainte étant reliés par leur extrémité intérieure (15) de manière non rotative à la bobine d'enroulement (8) de la ceinture de sécurité et par leur extrémité extérieure (16) de manière non rotative à l'élément (18) bloqué en rotation en cas d'accident.

6. Enrouleur selon la revendication 5, **caractérisé en ce que** la barre (11) formant les moyens limiteurs supplémentaires est pourvue d'une rainure annulaire (22) afin de casser sous un angle de torsion prédéterminé.

7. Enrouleur selon la revendication 5, **caractérisé en ce que** la barre (24) formant les moyens limiteurs supplémentaires est pourvue d'un trou axial (30) ayant un diamètre prédéterminé et une épaisseur prédéterminée entre son diamètre extérieur et son diamètre intérieur.

8. Enrouleur selon la revendication 2 ou 4, **caractérisé en ce qu'**il comprend des moyens pré-tendeurs (21).

9. Système de sécurité pour les passagers d'un véhicule automobile avec au moins un coussin gonflable (6) monté devant un passager et un enrouleur selon l'une quelconque des revendications 1 à 8, **caractérisé en ce qu'**il est conformé pour que les moyens limiteurs supplémentaires (11) cassent à un angle de torsion prédéterminé en fonction du gonflage du coussin gonflable (6) et de manière que le coussin gonflable (6) absorbe une partie importante de l'énergie du passager en cas d'accident.

## Claims

1. A self-locking winder for a seat belt of a motor vehicle fitted with an airbag, the seat belt and the airbag being designed for interdependently protecting the same passenger, the winder comprising a winding reel (8) rotationally mounted in a housing (7), and a staged stress limiter having a torsion bar (9) mounted by one (12) of the two opposite ends thereof (12, 15) on a shaft of the winding reel (8) and by the other end (15) on a blocking means controlled by a parameter of the vehicle and/or the seat belt, the torsion bar (9) being a limiter having two stress levels, comprising torsion bar main limiting means (10), and axially aligned therewith (10), additional stress limiting means (11) mounted by the external end (16) thereof on a member (18) rotationally locked in a predetermined situation, **characterized in that** the additional stress limiting means (11) are shaped so as to form a breakable part (19) designed for breaking when a predetermined maximum torque (Tk) acting on the torsion bar (9) is exceeded.

2. The winder according to claim 1, **characterized in that** the main limiting means (10) and the additional means (11) are parts of a torsion bar (9) made as a single part.

3. The winder according to claim 2, **characterized in that** the additional means (11) are composed of a tubular torsion bar having a predetermined internal diameter and a predetermined thickness.

4. The winder according to claim 2, **characterized in that** the additional means (11) are composed of a part of the torsion bar the diameter of which is reduced in a predetermined way.

5. The winder according to claim 1, **characterized in that** the torsion bar (9) forming a limiter with two stress levels is made as two parts (10, 11), the additional stress limiting means (11) being linked by the internal end (15) thereof non-rotationally to the winding reel (8) of the seat belt and by the external end (16) thereof non-rotationally to member (18) rotationally locked in case of an accident.

6. The winder according to claim 5, **characterized in that** the bar (11) forming the additional limiting means is equipped with an annular groove (22) in order to break at a predetermined torsion angle.

7. The winder according to claim 5, **characterized in that** the bar (24) forming the additional limiting means is provided with an axial hole (30) having a predetermined diameter and a predetermined thickness between the external diameter and the internal diameter thereof.

8. The winder according to claim 2 or 4, **characterized in that** it comprises pre-tensioning means (21).

9. Safety system for the passengers of a motor vehicle comprising at least one airbag (6) mounted in front of a passenger and a winder according to any of claims 1 to 8, **characterized in that** it is shaped so that the additional limiting means (11) break at a predetermined torsion angle depending on inflation of the airbag (6) and whereby the airbag (6) absorbs an great deal of the passenger's energy in case of an accident.

## Patentansprüche

1. Selbstsperrendes Aufrollsystem für einen Sicherheitsgurt eines Kraftfahrzeugs, das mit einem Airbag ausgestattet ist, wobei der Sicherheitsgurt und der Airbag dazu gedacht sind, in Abhängigkeit voneinander denselben Fahrgast zu schützen, wobei das Aufrollsystem eine Aufwickelrolle (8), die drehbar in einem Gehäuse (7) angebracht ist, und einen abgestuften Belastungsbegrenzer mit einer Drehfeder (9), die mit einem (12) ihrer beiden gegenüberliegenden Enden (12, 15) auf einer Spindel der Aufwickelrolle (8) und mit dem anderen Ende (15) auf einem Blockiermittel angebracht ist, das durch einen Parameter des Fahrzeugs und/oder des Sicherheitsgurts gesteuert wird, umfasst, wobei die Drehfeder (9) ein Begrenzer mit zwei Belastungsstufen ist, der Hauptbegrenzungsmittel (10) mit Drehfeder und axial mit diesen (10) fluchtend zusätzliche Belastungsbegrenzungsmittel (11), die mit ihrem äußeren Ende (16) auf einem Organ (18) angebracht sind, das in einer vorherbestimmten Lage drehbar blockiert ist, umfasst, **dadurch gekennzeichnet, dass** die zusätzlichen Belastungsbegrenzungsmittel (11) derart ausgestaltet sind, dass sie ein Sollbruchteil (19) bilden, das dazu gedacht ist zu zerbrechen, wenn ein auf die Drehfeder (9) einwirkendes vorherbestimmtes Höchstdrehmoment (Tk) überschritten wird.

2. Aufrollsystem nach Anspruch 1, **dadurch gekennzeichnet, dass** die Hauptbegrenzungsmittel (10) und die zusätzlichen Mittel (11) Teile einer Drehfeder (9) sind, die einstückig ausgebildet ist.

3. Aufrollsystem nach Anspruch 2, **dadurch gekennzeichnet, dass** die zusätzlichen Mittel (11) aus einer röhrenförmigen Drehfeder bestehen, die einen vorherbestimmten Innendurchmesser und eine vorherbestimmte Dicke aufweist.

4. Aufrollsystem nach Anspruch 2, **dadurch gekennzeichnet, dass** die zusätzlichen Mittel (11) aus einem Teil der Drehfeder bestehen, dessen Durchmesser auf vorherbestimmte Art und Weise reduziert ist.

5. Aufrollsystem nach Anspruch 1, **dadurch gekennzeichnet, dass** die Drehfeder (9), die einen zweistufigen Belastungsbegrenzer bildet, in zwei Teilen (10, 11) ausgebildet ist, wobei die zusätzlichen Belastungsbegrenzungsmittel (11) mit ihrem inneren Ende (15) nicht drehbar mit der Aufwickelrolle (8) des Sicherheitsgurts und mit ihrem äußeren Ende (16) nicht drehbar mit dem Organ (18), das bei einem Unfall drehfest blockiert wird, verbunden sind.

6. Aufrollsystem nach Anspruch 5, **dadurch gekennzeichnet, dass** die Feder (11), welche die zusätzlichen Begrenzungsmittel bildet, mit einer ringförmigen Nut (22) versehen ist, um unter einem vorherbestimmten Verdrehungswinkel zu zerbrechen.

7. Aufrollsystem nach Anspruch 5, **dadurch gekennzeichnet, dass** die Feder (24), welche die zusätzlichen Begrenzungsmittel bildet, mit einem Axialloch (30) versehen ist, das einen vorherbestimmten Durchmesser und eine vorherbestimmte Dicke zwischen seinem Außendurchmesser und seinem Innendurchmesser aufweist.

8. Aufrollsystem nach Anspruch 2 oder 4, **dadurch gekennzeichnet, dass** es Vorspannmittel (21) umfasst.

9. Sicherheitssystem für die Fahrgäste eines Kraftfahrzeugs mit mindestens einem Airbag (6), der vor einem Fahrgast angebracht ist, und einem Aufrollsystem nach einem der Ansprüche 1 bis 8, **dadurch gekennzeichnet, dass** es ausgestaltet ist, damit die zusätzlichen Begrenzungsmittel (11) unter einem Verdrehungswinkel zerbrechen, der je nach dem Luftdruck des Airbags (6) vorherbestimmt ist, und so dass der Airbag (6) einen Großteil der Energie des Fahrgasts bei einem Unfall aufnimmt .
